# EUROPÄISCHE PATENTSCHRIFT

(11) **EP 1 890 796 B1**
(45) Veröffentlichungstag und Bekanntmachung des Hinweises auf die Patenterteilung: **30.03.2011**
(21) Anmeldenummer: 06763413.9
(22) Anmeldetag: 31.05.2006
(51) Int. Cl.: B01D 61/10, B01D 61/12, C02F 1/44, B63J 1/00, C02F 103/08

(54) **TRINKWASSERERZEUGUNGS- UND VERSORGUNGSSCHIFF**
DRINKING WATER GENERATION AND SUPPLY SHIP
NAVIRE DE PRODUCTION ET DE DISTRIBUTION D'EAU POTABLE

(30) Priorität: 02.06.2005 DE 102005025428
(43) Veröffentlichungstag der Anmeldung: 27.02.2008
(73) Patentinhaber: SIEMENS AKTIENGESELLSCHAFT, 80333 München (DE)
(72) Erfinder: ANDERSEN, Peter, 21075 Hamburg (DE); SILLJE, Christian, 28790 Schwanewede (DE); VOSS, Ulrich, 91056 Erlangen (DE)
(86) Internationale Anmeldenummer: PCT/EP2006/062774
(87) Internationale Veröffentlichungsnummer: WO 2006/128886

(56) Entgegenhaltungen:
- DE-A1- 10 128 152
- DE-C1- 4 340 747
- ES-A1- 2 165 824
- US-A1- 2002 189 987
- US-A1- 2004 206 681

## Beschreibung

Die Erfindung betrifft ein Trinkwassererzeugungs- und Versorgungsschiff mit einem Schiffsrumpf, der mindestens einen Tank zum Speichern des erzeugten Trinkwassers, einen Tank zur Aufnahme von Seewasser und eine Einrichtung zur Erzeugung von Trinkwasser aus Meerwasser nach dem Prinzip der Umkehrosmose (ROM) sowie Übergabevorrichtungen für das erzeugte Trinkwasser zu einer Landstation aufweist.

Ein dem Vorstehenden entsprechendes Trinkwassererzeugungs-und Versorgungsschiff ist aus der GB 2 256 377 A bekannt. Das bekannte Schiff weist eine Reihe von kleineren Trinkwassererzeugungseinrichtungen auf, wie sie auch zur Versorgung von Passagierdampfern oder von kleinen Ortschaften bekannt sind. Der Wirkungsgrad derartiger Einheiten, die etwa Containergröße haben, ist relativ schlecht und sie sind wartungsintensiv. Das erzeugte Trinkwasser wird in einem Sammeltank bis zu seiner Übergabe an eine Landstation gesammelt. Zur Übergabe muss sich das Schiff in Landnähe, am besten an einer Pier, befinden.

Die US 2004/0206681 A offenbart ein Trinkwasserversorgungsschiff mit modular aufgebauter Umkehrosmoseanlage, dessen Maschinen aus einem Niederspannungsbordnetz versorgt werden.

Aus der DE 101 28 152 A sowie der DE 43 40 747 C sind Schiffsbordnetze bekannt, die ein Mittelspannungsnetz mit Niedrigspannungsabzeigen aufweisen. Beide beschäftigen sich jedoch mit spezifischen Problemen der Antriebsanlage.

Es ist Aufgabe der Erfindung, ein Trinkwassererzeugungs- und Versorgungsschiff anzugeben, das wirtschaftlich zuverlässig und wartungsarm sowie umweltverträglich Trinkwasser erzeugen und auch von einer Position in größerem Abstand zur Küste abgeben kann. Hierfür ist die Einbindung des Trinkwassererzeugungs- und Versorgungsschiffs in ein flexibel ausgestaltbares Übergabesystem vorgesehen. Dabei soll eine optimale Energieausnutzung in dem System "Schiff mit Osmoseanlage" gewährleistet werden.

Zur Lösung der Aufgabe ist ein Schiff gemäß Anspruch 1 vorgesehen. Die Einrichtung zur Erzeugung von Trinkwasser ist als einteilige Großeinheit ausgebildet und bezieht die von ihr benötigte Elektroenergie aus einem Schiffsversorgungsnetz, das auch elektrische Propellermotoren für den Antrieb des Schiffes mit Elektroenergie versorgt. Die Großeinheit zur Erzeugung von Trinkwasser bildet dabei mit ihrer Verrohrung einen integralen Bestandteil des Schiffes, der schon während der Bauphase des Schiffes gefertigt und eingefügt wird. Der Schiffsrumpf und seine Verbände werden entsprechend entworfen. So kann erfindungsgemäß ein kostenoptimiertes Wassererzeugungs- und Versorgungsschiff gebaut werden.

In der Erfindung ist vorgesehen, dass das in jedem Schiff vorhandene Schiffsversorgungsnetz erfindungsgemäß als Mittelspannungsnetz mit Niederspannungsabzweigen ausgebildet ist. Dies vermindert vorteilhaft die Baugröße der notwendigen Hauptschaltanlagen und ermöglicht eine besonders effiziente Art der Energieverteilung zu den Hauptverbrauchern.

In der Erfindung ist weiterhin vorgesehen, dass die Energieerzeugung über redundante Dieselgeneratorsätze und ein redundant aufgebautes Netz erfolgt. So ergibt sich ein langzeitig zuverlässiger Betrieb, der insbesondere ein besonders günstiges Teillastverhältnis ermöglicht. Nicht benötigte Dieselgeneratorsätze können abgeschaltet werden, die in Betrieb gehaltenen E-Energieerzeuger können im optimalen Betriebspunkt gefahren werden.

In der Erfindung ist z̵udem vorgesehen, dass das erfindungsgemäße Schiff eine Schaltanlage aufweist, die zweiteilig aufgebaut ist und deren Teile jeweils für die halbe Antriebs- und Generatorleistung bestimmt sind. Zusammen mit azimuthierenden Ruderpropellerantrieben in ebenfalls doppelter Ausführung mit jeweils halber Leistung ergibt sich so eine besonders betriebssichere Ausführung der Schiffsantriebs-, Generator- und Verteilungsanlagen. Das Schiff ist mindestens zwei, insbesondere jedoch vier, Dieselgeneratorsätze zur Erzeugung der benötigten Elektroenergie aufweist, die unabhängig voneinander betreibbar ausgebildet sind. So ergibt sich auch der erwähnte Vorteil, dass bei Teillastbedarf auch Dieselgeneratorsätze abgeschaltet werden können, so dass die verbleibenden Dieselgeneratorsätze mit höchstem Wirkungsgrad arbeiten können. Dabei kann auch das Ausfallrisiko der Dieselmotoren der Dieselgeneratorsätze bei nur Teillastbetrieb über längere Zeit gesenkt werden.

In Ausgestaltung der Erfindung ist weiterhin vorgesehen, dass das Schiff ein Automatisierungssystem für die Erzeugung der Elektroenergie, die Fahranlage des Schiffes und die Umkehrosmoseanlage aufweist. So kann ein besonders sicherer Betrieb erreicht werden, da Bedienungsfehler vermieden werden können. Es ist dabei von besonderem Vorteil, dass das Automatisierungssystem eine wählbare Lastaufteilung zwischen den Schiffsantrieben und den Antrieben der Umkehrosmoseanlage aufweisen kann, so kann eine Trinkwassererzeugung stattfinden, die sich an der Restfahrstrecke des Schiffes und der Schiffsgeschwindigkeit orientiert. Hierfür ist ein optimiertes Fahrprofil einsetzbar, das etwa in einem Optimierungsrechner erarbeitet wird.

In Ausgestaltung der Erfindung ist weiterhin eine rechentechnisch arbeitende Energiemanagementeinrichtung für die Abstimmung der einzelnen Verbraucher aufeinander und auf die Energieerzeugungseinrichtungen zur Erreichung einer optimalen Energieeffizienz vorgesehen. So kann immer die günstigste Lastaufteilung zwischen Antrieb und Umkehrosmoseeinrichtung, den Pumpen für die Tanks und den weiteren Einrichtungen des Schiffes in Abhängigkeit von der Fahrtstrecke und der Fahrtgeschwindigkeit sowie der benötigten Trinkwassermenge erhalten werden. Ein derartiges verbrauchsoptimiertes Energiemanagement kann die Energieeffizienz soweit steigern, dass der Energiebedarf von stationären Anlagen erreicht oder sogar unterschritten wird.

Die Dieselgeneratoranlagen von ortsfesten Meerwasserentsalzungsanlagen kennen in der Regel eine derartige verbrauchsoptimierte Fahrweise nicht sondern arbeiten mit konstanter Leistung.

Die Trinkwassererzeugung erfolgt bei dem erfindungsgemäßen Schiff in der Regel bei relativ langsamer Fahrt, d.h. bei einer Fahrt von 4 bis 6 kn, sie kann aber auch bei Stillliegen des Schiffes, etwa vor der Küste, erfolgen. Sowohl für diesen Fall als auch für die Übergabe des erzeugten Trinkwassers auf eine Trinkwasseraufnahmeboje oder eine Barge, die auch als Zwischenspeicher dienen kann, weist das erfindungsgemäße Schiff eine Positionshaltesteuerung, etwa auf DP-Basis, auf, die auf Bugstrahlruder, in der Regel zwei Bugstrahlruder, und auf den Ruderpropellerantrieb einwirkt. Entsprechende Positionshaltesteuerungen auf DP-Basis sind von schwimmenden Bohrinseln bekannt, die Ruderpropeller aufweisen. Sie können auch auf die Betätigung von Bugstrahlrudern ausgeweitet werden, so dass sich auch für große, seegehende Schiffe eine entsprechende Positionshaltemöglichkeit mit Hilfe des DP-Systems (Dynamic Positioning) ergibt.

Der Schiffsbetrieb des erfindungsgemäßen Schiffs wird von einem Schiffsautomatisierungssystem mit Alarm- und Monitoringfunktionen gesteuert und überwacht. Dieses weist vorteilhaft auch einen Ladungsrechner auf. So kann insbesondere den während der Fahrt wechselnden Tankfüllungen stabilitätsmäßig Rechnung getragen werden. Dies betrifft den Trimm des Schiffes und die Belastung des Rumpfes. Auch die Funktion der Trinkwassererzeugungsanlage wird vorteilhaft mit in das Automatisierungssystem mit einbezogen. Auch insofern bildet die Trinkwassererzeugungsanlage einen integralen Schiffsbestandteil.

In Ausgestaltung des Trinkwassererzeugungs- und Versorgungsschiffs kann vorgesehen werden, dass es eine mehrstufige, als Großanlage ausgebildete Trinkwassererzeugungseinrichtung aufweist, die zumindest eine Vorfiltrationsstufe besitzt. An die Vorfiltrationsstufe kann sich eine Ultrafiltrationsstufe anschließen. Die Vorfiltrationsstufe entnimmt Seewasser aus einem Seewassertank, mit dessen Hilfe die ordnungsgemäße Trimmlage des Schiffes auch bei zunehmender Speicherung von Trinkwasser möglich ist.

Es kann weiterhin vorgesehen werden, dass sich an die Ultrafiltrationsstufe ein Zwischentank anschließt, hinter dem sich unter Benutzung eines Ionentauschers die Umkehrosmoseanlage befindet.

Weiterhin kann vorgesehen werden, dass sich im Anschluss an die Umkehrosmoseanlage eine Wasseraufbereitungsstufe anschließt, aus der ein Frischwassertank befüllt wird, der als Übergabetank für das Frischwasser dient.

Bevorzugt sind die vorstehend genannten Stufen der Trinkwassererzeugungseinrichtung durch ein Automatisierungssystem aufeinander abgestimmt, wobei das Automatisierungssystem auf die Pumpen und Ventile der Einrichtung wirkt und Mess- und Regelorgane aufweist, die eine störungsfreie optimierte Betriebsweise ermöglichen.

Das Automatisierungssystem ist vorteilhaft mit einer zentralen Schalt- und Anzeigeeinrichtung verbunden, insbesondere auf Touch Screen-Basis, die auf der Brücke des Schiffes angeordnet ist und insoweit die Fahranlage des Schiffes, die E-nergieerzeugungsanlage etc. ergänzt. So ist ein sicherer Ein-Mann-Betrieb des Schiffes bei gleichzeitiger optimierter Funktionsweise aller Einrichtungen möglich. Ergänzt wird das Automatisierungssystem durch das Energiemanagementsystem mit der Optimierungseinrichtung für den Energieverbrauch.

Das erfindungsgemäße Schiff wird vorteilhaft als Trinkwassererzeugungs- und Zwischenspeichereinheit in einem Trinkwasservorsorgungssystem für Städte oder Industrieanlagen verwendet. Es ist dabei vorgesehen, dass es wahlweise im Zusammenwirken mit einem weiteren schwimmenden Zwischenspeicher, z.B. einer Wasserversorgungsboje oder einer Barge, verwendet wird. So kann vorteilhaft erreicht werden, dass die Übergabezeiten, d.h. die Zeiten, in denen das Schiff in Küstennähe verbringen muss, besonders kurz werden. Vorteilhaft kann so immer auf frisches Seewasser zurückgegriffen werden, das unterhalb des Schiffes in einem Gebiet, in dem die natürliche Salzkonzentration des Seewassers herrscht, entnommen wird. So ist die Konzentration des Seewassers mit Sicherheit unbeeinflusst von küstennahen und oberflächennahen Verdunstungsvorgängen, die die Salzkonzentration des Meerwassers erhöhen. Da so kilometerlange Entnahmeleitungen und Rückleitungen für die ortsfesten Meerwasserentsalzungsanlagen vermieden werden, ergibt sich auch ein verringerter Kostenaufwand und eine geringere zu installierende Pumpenleistung im Vergleich zu ortsfesten Anlagen.

Die Erfindung wird anhand von Zeichnungen näher erläutert, aus denen, ebenso wie aus den Unteransprüchen, auch weitere erfinderische Einzelheiten entnehmbar sind.

Im Einzelnen zeigen:
- FIG 1: einen Küstenbereich mit Versorgungstanks für Trinkwas- ser sowie einem auf Position gehaltenen erfindungsge- mäßen Schiff,
- FIG 2: ein Prinzipschaltbild der schiffseigenen Mittelspan- nungseinrichtung mit den Hauptantrieben und
- FIG 3: ein Flussdiagramm der erfindungsgemäßen Trinkwasserer- zeugungseinrichtung.

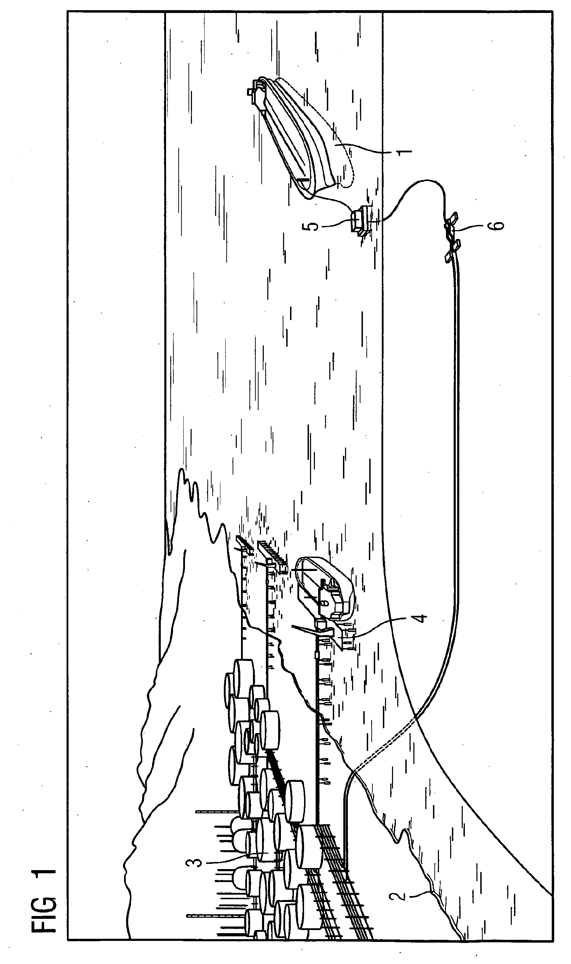

In dem Ausführungsbeispiel bezeichnet 1 in FIGUR 1 das Trinkwassererzeugungs- und Versorgungsschiff vor der Küstenlinie 2. Auf dem Festland befinden sich Trinkwasservorratstanks 3, die mit einem Übergabeterminal 4 über Rohrleitungen verbunden sind. Das Trinkwassererzeugungs- und Versorgungsschiff 1 kann nun entweder an dem Terminal 4 anlegen oder eine Übergabeboje 5 versorgen, die schwimmend, aber auch am Meeresboden, wie 6 zeigt, angeordnet sein kann. Hier kann auch eine Zwischenspeicherung stattfinden, um die Abgabe des Trinkwassers von dem Trinkwassererzeugungs- und Versorgungsschiff 1 zu beschleunigen, damit dieses in die Lage versetzt wird, möglichst schnell den Küstenbereich zu verlassen. Es versteht sich, dass in Bezug auf die Übergabe des erzeugten Trinkwassers Variationen möglich sind, die auf die besonderen Eigenheiten der Versorgungs- und Übergabestationen Rücksicht nehmen. So können z.B. auch Bargen eingesetzt werden, die nach Füllung zu ihrem Entladeort geschleppt werden.

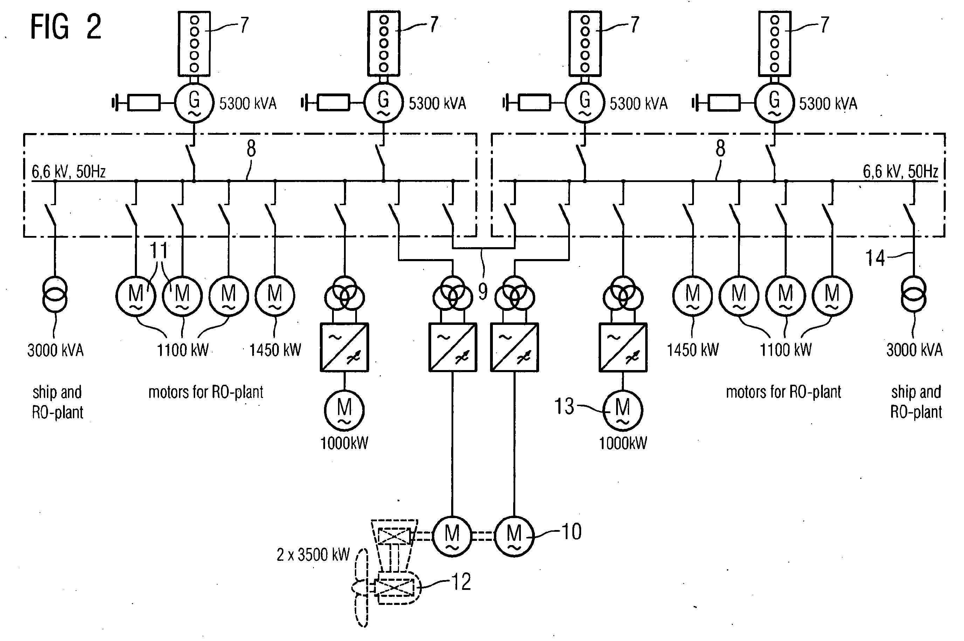

In FIGUR 2 bezeichnen 7 Dieselgeneratorsätze, die unabhängig voneinander betreibbar sind. In dem gezeigten Beispiel haben diese Dieselgeneratorsätze eine Leistung von einigen Megawatt, so dass mit ihrer Energie sowohl die Motoren 10 der Antriebsanlage als auch die Pumpenmotoren 11 der Umkehrosmoseanlage für ein Trinkwassererzeugungs- und Versorgungsschiff von 20 000 bis 30 000 t Tragfähigkeit betreibbar sind. Die Dieselgeneratorsätze arbeiten jeweils auf Teil-Sammelschienen 8, die über eine Schalteinrichtung 9 miteinander verbunden werden können. Von den Sammelschienen 8 gelangt die Elektroenergie für die Antriebe über Transformatoren und Stromrichter zu den Motoren 10, die jeweils doppelt auf einen kostengünstigen mechanischen Ruderpropeller 12 arbeiten. Das Schiff kann wahlweise mit einem, aber auch mit zwei Ruderpropellern 12 ausgerüstet werden, so dass sich eine sehr hohe Sicherheit für den Antrieb ergibt. Natürlich sind auch elektrische Ruderpropeller verwendbar, die einen E-Motor mit zwei Wicklungen zwischen zwei Propeller nach Art des Siemens-Schottel-Propulsors aufweisen. In Verbindung mit Querstrahlrudern im Heck können auch normale dieselelektrische Antriebe eingesetzt werden, ohne den Rahmen der Erfindung zu verlassen.

Außer den Ruderpropellern 12 weist das Schiff auch vorzugsweise zwei Querstrahlruder mit Motoren 13 auf. Auch die Querstrahlrudermotoren 13, die etwa 1 MW leisten, werden über Stromrichter und Transformatoren mit Energie versorgt. Von jeder der beiden Sammelschienen 8 gehen Abzweige 14 ab, aus denen die normalen Bordstromnetze mit Energie versorgt werden. Das Mittelspannungsnetz, vorzugsweise ein 50/60/Hz-Netz, weist etwa eine Spannung von 6,6 kV, ggf. auch von 11 kV, auf. Hieraus werden die Großverbraucher, nämlich die Pumpenantriebe 11, der Ruderpropeller 12 und die Bugstrahlruder 13 redundant mit Energie versorgt, während für die Niederspannungsbordnetze, die sich an den Abzweig 14 anschließen, eine Spannung von etwa 400 oder 690 Volt vorgesehen ist. Insgesamt ergibt sich eine Bordstromversorgung, und zwar sowohl für die Antriebe als auch für die Hilfseinrichtungen, die eine hohe Sicherheit bei guter Energieausnutzung und hoher Flexibilität, mit einer Erzeugungs- und Verbrauchsoptimierung verbindet.

Die Optimierung erfolgt in einem nicht näher erläuterten Optimierungssystem, das in seinen Grundzügen bereits aus der allgemeinen Automatisierungstechnik, etwa von Industrieanlagen, bekannt ist. Auch bei stationären Industrieanlagen wird heute in erhöhtem Maß ein Energiemanagement betrieben, das den Energieverbrauch einer Industrieanlage, und um nichts anderes handelt es sich bei einem erfindungsgemäßen Schiff, optimiert.

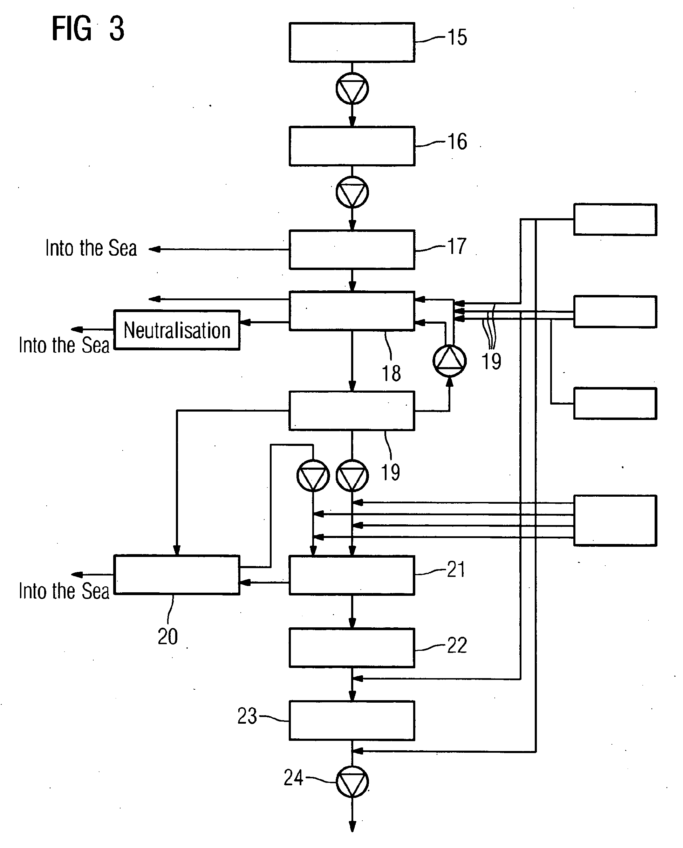

Aus FIGUR 3 ist ein Flussdiagramm für die Trinkwassererzeugung ersichtlich. Der Eintritt des Seewassers ist durch 15 bezeichnet. Wie bereits erwähnt, erfolgt die Entnahme des Seewassers aus Wasserschichten unter dem erfindungsgemäßen Schiff und in einem Bereich, in dem eine normale Salzkonzentration des Seewassers vorliegt. Das Seewasser gelangt z.B. durch eine Pumpe mit einer Leistung von 3500 m³/h in einen Zwischentank, der auch Trimmzwecken dient. Der Zwischentank ist mit 16 bezeichnet. Aus dem Zwischentankbereich 16 gelangt das Seewasser in den Vorfiltrationsbereich 17 und von dort in den Ultrafiltrationsbereich 18, wo eine erste Zugabe von Chemikalien erfolgt, was durch die Pfeile 19 verdeutlicht wird. Die physikalischen und chemischen Vorgänge in einer Umkehrosmoseanlage sind bekannt und nicht Gegenstand dieser Erfindung. Das gleiche gilt auch für die Zugabe von Chemikalien.

Aus der Ultrafiltrationsstufe 18 gelangt das Wasser in einen Zwischentank 19 und von dort direkt oder über einen Ionentauscher 20 in den Umkehrosmosebereich 21. Anschließend an die Umkehrosmose (RO) durchläuft das Wasser eine als Lime-Filtration bezeichnete Stufe 22 und gelangt dann zum Trinkwassertank 23, aus dem das Trinkwasser über die Förderpumpe 24 und über flexible Rohrleitungen oder.ähnliche Einrichtungen in die Vorratstanks gelangt. Die in üblicher Weise gezeichneten Pumpen haben eine erhebliche Leistungsaufnahme, daher ist ihr Anschluss an ein Mittelspannungsnetz, wie er erfindungsgemäß vorgesehen ist, besonders vorteilhaft. Die großen Förderpumpen für das Wasser, beispielhaft ist die Förderpumpe 24 zu sehen, werden durch eine Vielzahl kleiner Pumpen, z.B. Dosierungs- oder Umwälzpumpen, ergänzt. Diese werden aus dem Niederspannungsnetz mit Energie versorgt, so dass sich auch bei der Umkehrosmoseanlage eine eindeutige Aufgabenteilung für Mittel- und Niederspannung ergibt.

Die Verwendung von Mittelspannungsanlagen ist in der Handelsschifffahrt noch nicht verbreitet, die Vorteile, die sich aus der Mittelspannungs-, Schalt- und Versorgungsanlage für das erfindungsgemäße Schiff ergeben, sind jedoch so erheblich, dass es sich lohnt, auf die erfindungsgemäße unkonventionelle Technik zurückzugreifen. Das Bordnetz ist für ein Schiff der vorgesehenen Größe von 20 000 bis 40 000 t sehr leistungsfähig (etwa 8 MW Antriebs- und 8 MW Versorgungsleistung für die Trinkwassererzeugungsanlage). Die Trinkwassererzeugungsanlage erzeugt ca. 2000 m³ je Stunde.

## Patentansprüche

1. Trinkwassererzeugungs- und Versorgungsschiff (1) mit einem elektrischen Ruderpropellerantrieb (10, 12) und einem Tank (23) für das erzeugte Trinkwasser, einem Seewassertank (16) und einer Umkehrosmoseeinrichtung (21) sowie Übergabevorrichtungen (5, 6) für das erzeugte Trinkwasser zu einer Landstation (3), wobei die Umkehrosmoseeinrichtung (21) als einteilige Großeinheit ausgebildet ist, die mit ihrer Verrohrung einen integralen Bestandteil des Schiffes (1) bildet und die ihre Elektroenergie aus einem Schiffsversorgungsnetz (8, 8) bezieht, das auch den Ruderpropellerantrieb (10, 12) mit Elektroenergie versorgt, wobei das Schiffsversorgungsnetz (8, 8) als Mittelspannungsnetz (8, 8) mit Niederspannungsabzweigen (14) ausgebildet ist, wobei das Schiffsversorgungsnetz (8, 8) als redundantes Netz mit redundanten Dieselgeneratorsätzen (7) zur Erzeugung der Elektroenergie ausgebildet ist und eine zweiteilige Schaltanlage (9) aufweist, deren Teile jeweils für die halbe Antriebs- und Generatorleistung bestimmt sind, wobei der Ruderpropellerantrieb (10, 12) zumindest einen, vorzugsweise zwei, azimuthierende Ruderpropeller (12) im Heckbereich aufweist, die vorzugsweise je zwei Elektromotoren (10) als Propellerantriebsmotoren aufweisen wobei große Förderpumpen der Umkehrosmoseeinrichtung (21) für das Wasser aus dem als Mittelspannungsnetz (8, 8) ausgebildeten Schiffsversorgungsnetz (8, 8) und wobei kleine Pumpen der Umkehrosmoseeinrichtung, z.B. Dosierungs- oder Umwälzpumpen, aus dem Niederspannungsnetz mit Elektroenergie versorgt werden.

2. Trinkwassererzeugungs- und Versorgungsschiff nach Anspruch 1, **dadurch gekennzeichnet, dass** es eine Positionshaltesteuerung, insbesondere auf GPS-Basis, aufweist, die auf die Ruderpropeller (12) des Schiffes und auf Bugstrahlruder einwirkt.

3. Trinkwassererzeugungs- und Versorgungsschiff nach Anspruch 1 oder 2, **dadurch gekennzeichnet, dass** der Schiffsbetrieb von einem Schiffsautomatisierungssystem mit Alarm- und Monitoringfunktionen gesteuert und überwacht wird, wobei das Schiffsautomatisierungssystem einen Ladungsrechner aufweist und insbesondere auch mit einem Kontrollsystem für die Trinkwassererzeugungsanlage verbunden ist.

4. Trinkwassererzeugungs- und Versorgungsschiff nach Anspruch 1, **dadurch gekennzeichnet, dass** es eine rechentechnisch arbeitende Energiemanagementeinrichtung für die Abstimmung der Lastaufteilung zwischen Schiffsantrieb und der Einrichtung für die Umkehrosmose aufeinander und auf die Energieerzeugungseinrichtungen zum Erreichen einer optimalen Energieeffizienz aufweist.

## Claims

1. Drinking-water production and supply marine vessel (1) having an electrical steering propeller drive (10, 12) and a tank (23) for the drinking water that is produced, a sea water tank (16) and a reverse osmosis device (21), as well as transfer apparatuses (5, 6) for transferring the drinking water that is produced to a land station (3), wherein the reverse osmosis device (21) is in the form of an integral large unit which, together with its pipe system, forms an integral component of the marine vessel (1) and which draws its electrical power from a marine vessel power supply system (8, 8), which also supplies electrical power to the steering propeller drive (10, 12), wherein the marine vessel power supply system (8, 8) is in the form of a medium-voltage system (8, 8) with low-voltage outgoers (14), wherein the marine vessel power supply system (8, 8) is in the form of a redundant power supply system with redundant diesel generator sets (7) for generation of the electrical power and has a two-part switchgear installation (9) whose parts are in each case designed for half the propulsion and generator power, wherein the steering propeller drive (10, 12) has at least one, and preferably two azimuth steering propellers (12) in the stern area, which preferably each have two electric motors (10) as propeller propulsion motors, wherein large feed pumps of the reverse osmosis device (21) for the water are supplied with electrical power from the marine-vessel power supply system (8, 8), which is in the form of a medium-voltage power supply system (8, 8), and wherein small pumps of the reverse osmosis process, for example metering pumps or circulating pumps, are supplied with electrical power from the low-voltage power supply system.

2. Drinking-water production and supply marine vessel according to Claim 1, **characterized in that** the marine vessel has a position maintenance controller, in particular based on GPS, which acts on the steering propellers (12) of the marine vessel and on a bow thruster or thrusters.

3. Drinking-water production and supply marine vessel according to Claim 1 or 2, **characterized in that** the marine vessel operation is controlled and monitored by a marine vessel automation system with alarm and monitoring functions, with the marine vessel automation system having a load computer and, in particular, also being connected to a monitoring system for the drinking-water production installation.

4. Drinking-water production and supply marine vessel according to Claim 1, **characterized in that** the marine vessel has a power management device, which operates on a computer basis, for matching the load splitting between the marine vessel propulsion and the device for reverse osmosis to one another and to the power generating devices in order to achieve optimum energy efficiency.

## Revendications

1. Navire ( 1 ) de production et de distribution d'eau potable, comprenant un entraînement ( 10, 12 ) électrique d'hélice de gouvernail et une cuve ( 23 ) pour l'eau potable produite, une cuve ( 16 ) d'eau de mer et un dispositif ( 21 ) d'osmose inverse, ainsi que des dispositifs ( 5, 6 ) de transvasement de l'eau potable produite à un poste ( 3 ) à terre, le dispositif ( 21 ) d'osmose inverse étant constitué sous la forme d'un groupe de grande dimension, une seule partie avec sa canalisation faisant partie intégrante du navire ( 1 ) et qui reçoit son énergie électrique d'un réseau ( 8, 8 ) d'alimentation du navire, qui alimente aussi l'entraînement ( 10, 12 ) de l'hélice du gouvernail en énergie électrique, le réseau ( 8, 8 ) d'alimentation du navire étant constitué sous la forme d'un réseau ( 8, 8 ) de moyenne tension ayant des branches ( 14 ) de basse tension, le réseau ( 8, 8 ) d'alimentation du navire étant constitué sous la forme d'un réseau redondant ayant des jeux redondants de génératrice diesel pour la production de l'énergie électrique et une installation ( 9 ) de commutation en deux parties, dont les parties sont destinées respectivement à la moitié de la puissance d'entraînement et de génératrice, l'entraînement ( 10, 12 ) de l'hélice du gouvernail ayant au moins une, et de préférence, deux hélices ( 12 ) de gouvernail azimutales dans la zone de la proue, qui ont respectivement deux moteurs ( 10 ) électriques comme moteurs d'entraînement d'hélice, de grandes pompes d'alimentation du dispositif ( 21 ) d'osmose inverse pour l'eau étant alimentées en énergie électrique par le réseau ( 8, 8 ) d'alimentation du navire constitué en réseau ( 8, 8 ) de moyenne tension et de petites pompes du dispositif d'osmose inverse, par exemple des pompes de dosage ou de recirculation, étant alimentées en énergie électrique par le réseau de basse tension.

2. Navire de production et de distribution d'eau potable suivant la revendication 1, **caractérisé en ce qu'**il a une commande de maintien de position, notamment à base de GPS, qui agit sur l'hélice ( 12 ) de gouvernail du navire et sur le gouvernail d'étrave.

3. Navire de production et de distribution d'eau potable suivant la revendication 1 ou 2, **caractérisé en ce que** l'entraînement du navire est commandé et contrôlé par un système d'automatisation pour navire, ayant des fonctions d'alerte et de contrôle, le système d'automatisation de navire comprenant un ordinateur de charge et étant relié notamment aussi à un système de contrôle de l'installation de production d'eau potable.

4. Navire de production et de distribution d'eau potable suivant la revendication 1, **caractérisé en ce qu'**il a un dispositif de gestion d'énergie fonctionnant par informatique, pour l'adaptation de la répartition de la charge entre l'entraînement du navire et le dispositif pour l'osmose inverse entre eux et avec les dispositifs de production d'énergie, pour obtenir un rendement le meilleur possible en énergie.
